# EUROPEAN PATENT APPLICATION

(11) **EP 1 698 780 A2**
(43) Date of publication of application: **06.09.2006**
(21) Application number: 06004241.3
(22) Date of filing: 02.03.2006
(51) Int. Cl.: F02N 17/08, F02N 11/08

(54) **Starting method and system for internal combustion engine**

(30) Priority: 02.03.2005 JP 2005058102
(71) Applicant: Hitachi, Ltd., Tokyo 100-8280 (JP); NISSAN MOTOR CO., LTD., Yokohama-shi, Kanagawa 221-0023 (JP)
(72) Inventor: Ohtsu, Eiichi, Chiyoda-ku Tokyo 100-8220 (JP); Okada, Takashi, Chiyoda-ku Tokyo 100-8220 (JP); Udono, Tadatsugu, Chiyoda-ku Tokyo 100-8220 (JP); Ohsuga, Minoru, Chiyoda-ku Tokyo 100-8220 (JP); Osada, Naoki, Yokohama-shi Kanagawa 221-0023 (JP); Yuuya, Masahiko, Yokohama-shi Kanagawa 221-0023 (JP); Mitsuhori, Atsushi, Yokohama-shi Kanagawa 221-0023 (JP); Fujita, Hidehiro, Yokohama-shi Kanagawa 221-0023 (JP)
(74) Representative: Beetz & Partner

(57) **Abstract**

A method and system for starting an internal combustion engine by utilizing combustion energy produced by injecting and igniting fuel in an engine cylinder under the expansion stroke, which can eliminate the necessity of precisely computing the combustion energy, can minimize an amount of energy, other than the combustion energy, supplied from a second energy supply unit (17), and can realize stable engine startup without causing a startup failure due to a combustion failure. At startup of the engine (1), energy is supplied to the engine from both a first energy supply unit performing direct injection and ignition of fuel, etc. and a second energy supply unit (17) employing, e.g., a starter motor, thereby starting the engine. After the engine (1) has started motion, the motion status of the engine (1) is determined based on, e.g., the engine revolution speed, and the energy supply to the engine from the second energy supply unit (17) is stopped based on a determination result.

## Description

### BACKGROUND OF THE INVENTION

### 1. Field of the Invention

The present invention relates to a starting method and system for an internal combustion engine, and more particularly to a starting method and system for an internal combustion engine, which are suitable for a vehicle intended to stop an engine in a not-running state (called an "idling stop vehicle" in Japan).

### 2. Description of the Related Art

Recently, "idling stop" vehicles have been increased for the purpose of saving fuel consumed by internal combustion engines (hereinafter referred to simply as "engines") and reducing amounts of gases exhausted from the engines. The term "idling stop" means an operation of automatically stopping an engine when the engine is in an idling state while a vehicle is stopped, and automatically restarting the engine when the vehicle is started to run. Various techniques for realizing the "idling stop" vehicles are proposed so far.

In the "idling stop" vehicle, if a time is taken to restart an engine, the starting operation of a vehicle is delayed with respect to the intention of a driver desiring to start the vehicle at once, thus resulting in deterioration of drivability. To perform the "idling stop" operation, therefore, it is important to quickly and smoothly restart the engine.

There is also known an "idling stop" system in which an engine is restarted with cranking by using a starter which externally applies rotation torque to a crankshaft. In such a system, however, because a large amount of electric power is required for the cranking, a large burden is imposed on a battery and deterioration of the battery is accelerated.

Against that background, a starting system is proposed (see, e.g., Patent Document 1: JP-A-2002-4985) in which fuel injection (direct injection) and ignition are performed for a cylinder having been under the expansion stroke in an engine stop state, and the engine generates rotation torque with combustion in itself, thus restarting the engine without using a starter. Further, the success or failure of the startup is determined based on the engine revolution speed after start of the combustion, and if the startup failure is determined, a starter motor is operated to add kinetic energy required for the engine startup.

With that starting system, however, because the engine is started by using external energy supplied from, e. g. , the starter motor after determining the startup failure, reaction to start the engine in the event of the startup failure is not sufficient.

To overcome such a problem, a starting system is proposed (see, e.g., Patent Document 1 : JP-A- 2004-108340) in which energy required for starting an engine is set as target energy, and energy controlled in accordance with the target energy is supplied from a predetermined startup energy supply unit to the engine, thus enabling optimum energy to be supplied based on a result of estimating the startup failure at the time of startup.

More specifically, that starting system employs, as startup energy supply units, a first energy supply unit for providing rotation torque (energy) with direct injection combustion of fuel in a cylinder and a second energy supply unit using a starter motor. The energy supplied to the engine from the first energy supply unit is estimated, and a deficiency of energy with respect to the target energy is compensated for by the second energy supply unit.

In that starting system, therefore, the energy produced with the combustion has to be precisely computed in advance for supplying supplemental energy from the second energy supply unit. However, a difficulty exists in precisely computing the combustion energy, and more precise computation requires an expensive sensor, e.g., a cylinder pressure sensor, to be added to execute the computation. If the combustion energy cannot be precisely computed, the amount of energy supplied from the second energy supply unit cannot also be precisely computed. This may cause a startup failure when the amount of energy supplied from the second energy supply unit is deficient, or wasteful consumption of energy when the amount of energy supplied from the second energy supply unit is excessive. Accordingly, optimum energy supply for starting the engine and startability of the engine cannot be achieved at the same time.

### SUMMARY OF THE INVENTION

An object of the present invention is to provide a method and system for starting an internal combustion engine by utilizing energy in the form of combustion energy produced by injecting and igniting fuel in an engine cylinder having been under the expansion stroke when rotation of the engine is stopped, which can eliminate the necessity of precisely computing the combustion energy, can minimize an amount of energy, other than the combustion energy, supplied from a second energy supply unit, and can realize stable startup of the engine without causing a startup failure due to a combustion failure.

The present invention resides in a starting method for an internal combustion engine which includes at least two energy supply units for supplying energy to bring the engine into motion and is started by using the at least two energy supply units, the starting method comprising the steps of supplying energy to the engine from each of the at least two energy supply units at startup of the engine, thereby starting the engine; and determining motion status of the engine after the engine has started motion, and stopping the energy supply to the engine from at least one of the plurality of energy supply units based on a determination result.

Also, the present invention resides in a starting method for an internal combustion engine which includes a first energy supply unit and a second energy supply unit for supplying energy to bring the engine into motion and is started by using the two energy supply units, the starting method comprising the steps of supplying energy to the engine from both the first energy supply unit and the second energy supply unit at startup of the engine, thereby starting the engine; and determining motion status of the engine after the engine has started motion, and stopping the energy supply to the engine from the second energy supply unit based on a determination result.

In the starting method for the internal combustion engine according to the present invention, preferably, the first energy supply unit directly injects and ignites fuel in a cylinder having been under expansion stroke in an engine stop state to produce combustion in the cylinder under the expansion stroke, and produces combustion in the other cylinders successively, thereby starting the engine by utilizing energy of the combustion, and the second energy supply unit externally applies rotation torque to a crankshaft of the engine, thereby starting the engine.

In the starting method for the internal combustion engine according to the present invention, preferably, the step of determining motion status of the engine is executed by determining whether revolution of the engine continues, based on a difference between an engine revolution speed at ignition timing in the first energy supply unit and an engine revolution speed at the time when a crank angle of the engine has changed through a predetermined rotation angle from a crank angle at the ignition timing, and by stopping the energy supply to the engine from the second energy supply unit when the revolution of the engine is determined to continue.

In the starting method for the internal combustion engine according to the present invention, preferably, the step of determining motion status of the engine is executed by determining whether the revolution of the engine continues, based on a difference between an engine revolution speed at ignition timing at which the first energy supply unit ignites the cylinder having been under compression stroke in the engine stop state and an engine revolution speed at the time when the crank angle of the engine has changed through the predetermined rotation angle from the crank angle at the ignition timing.

In the starting method for the internal combustion engine according to the present invention, preferably, the step of determining motion status of the engine is executed by determining whether revolution of the engine continues, based on confirming that the crankshaft has passed a predetermined rotational position where load torque caused about the crankshaft by compressive pressure generated in the cylinder, which has been under compression stroke in the engine stop state, is maximized, and by stopping the energy supply to the engine from the second energy supply unit when the revolution of the engine is determined to continue.

In the starting method for the internal combustion engine according to the present invention, preferably, when the revolution of the engine is determined not to continue, the energy supply to the engine from the second energy supply unit is continued while repeating the determination as to the motion status of the engine.

Further, the present invention resides in a starting system for an internal combustion engine which includes at least two energy supply units for supplying energy to bring the engine into motion and is started by using the at least two energy supply units, the starting system comprising a motion status determining unit for determining motion status of the engine; and an energy supply control unit for supplying energy from each of the at least two energy supply units at startup of the engine, thereby starting the engine, and stopping the energy supply to the engine from at least one of the plurality of energy supply units based on a determination result made by the motion status determining unit after the engine has started motion.

Still further, the present invention resides in a starting system for an internal combustion engine which includes a first energy supply unit and a second energy supply unit for supplying energy to bring the engine into motion and is started by using the two energy supply units, the starting system comprising a motion status determining unit for determining motion status of the engine; and an energy supply control unit for supplying energy from both the first energy supply unit and the second energy supply unit at startup of the engine, thereby starting the engine, and stopping the energy supply to the engine from the second energy supply unit based on a determination result made by the motion status determining unit after the engine has started motion.

In the starting system for the internal combustion engine according to the present invention, preferably, the first energy supply unit directly injects and ignites fuel in a cylinder having been under expansion stroke in an engine stop state to produce combustion in the cylinder under the expansion stroke, and produces combustion in the other cylinders successively, thereby starting the engine by utilizing energy of the combustion, and the second energy supply unit externally applies rotation torque to a crankshaft of the engine, thereby starting the engine.

In the starting system for the internal combustion engine according to the present invention, preferably, the motion status determining unit determines whether revolution of the engine continues, based on a difference between an engine revolution speed at ignition timing in the first energy supply unit and an engine revolution speed at the time when a crank angle of the engine has changed through a predetermined rotation angle from a crank angle at the ignition timing, and the energy supply control unit stops the energy supply to the engine from the second energy supply unit when the motion status determining unit determines that the revolution of the engine continues.

In the starting system for the internal combustion engine according to the present invention, preferably, the motion status determining unit determines whether the revolution of the engine continues, based on a difference between an engine revolution speed at ignition timing at which the first energy supply unit ignites the cylinder having been under compression stroke in the engine stop state and an engine revolution speed at the time when the crank angle of the engine has changed through the predetermined rotation angle from the crank angle at the ignition timing.

In the starting system for the internal combustion engine according to the present invention, preferably, the motion status determining unit determines whether revolution of the engine continues, based on confirming that the crankshaft has passed a predetermined rotational position where load torque caused about the crankshaft by compressive pressure generated in the cylinder, which has been under compression stroke in the engine stop state, is maximized, and the energy supply control unit stops the energy supply to the engine from the second energy supply unit when the motion status determining unit determines that the revolution of the engine continues.

According to the present invention, the status of the engine brought into motion by energy supplied from each energy supply unit at the startup is determined and the supply of a part of the energy is stopped based on the determination result without computing the energy supplied from each energy supply unit at the startup. It is therefore possible to eliminate the necessity of precisely computing the supplied energy, to minimize a supply amount of second energy other than combustion energy, to realize stable startup of the engine without causing a startup failure, and to reduce noise at the startup. Further, because of need of neither adding a sensor for estimating the supplied energy with high accuracy nor using an advanced energy supply unit, the engine starting system can be constructed at a lower cost.

Also, the determination as to the motion status of the engine can be simply executed, with no need of adding a special sensor, by evaluating the difference between the engine revolution speed at the ignition timing and the engine revolution speed at the time when the crank angle of the engine has changed through the predetermined rotation angle from the crank angle at the ignition timing, or by confirming that the crankshaft has passed the predetermined rotational position where load torque caused about the crankshaft by compressive pressure generated in the cylinder, which has been under compression stroke in the engine stop state, is maximized.

### BRIEF DESCRIPTION OF THE DRAWINGS

Fig. 1 is a schematic view of an internal combustion engine to which a starting system according to one embodiment of the present invention is applied;
Fig. 2 is a schematic view of a control unit constituting the starting system for the engine according to the one embodiment of the present invention;
Fig. 3 is a block diagram showing the details of a principal part of the starting system for the engine according to the one embodiment of the present invention;
Fig. 4 is a flowchart showing the outline of a stop/start control method for the engine according to the one embodiment of the present invention;
Fig. 5 is a flowchart showing the outline of a startup method for the engine according to the one embodiment of the present invention;
Fig. 6 is a flowchart showing the details of a processing flow in first energy supply control according to the one embodiment of the present invention; and
Fig. 7 is a flowchart of a process for computing the engine status and a process for determining the engine status according to the one embodiment of the present invention.

### DESCRIPTION OF THE PREFERRED EMBODIMENTS

A starting system according to one embodiment of the present invention and an internal combustion engine to which the starting system is applied will be described below with reference to the drawings.

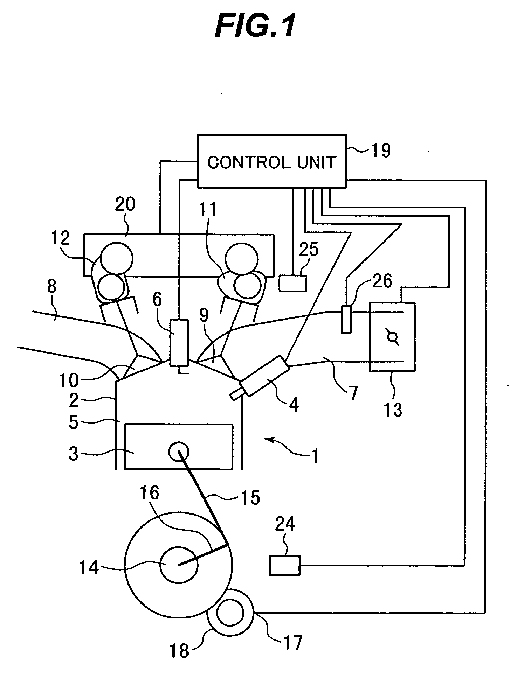

Referring to Fig. 1, an internal combustion engine 1 is constituted, for example, as a 4-cycle engine mounted on an automobile, and includes a plurality of cylinders 2. Though Fig. 1 shows only one cylinder 2, the other cylinders 2 also have the same structure. Note that, in the following description, the internal combustion engine 1 is simply referred to as the "engine 1".

The engine 1 may have the cylinders 2 in number, e.g., 3, 4, 6 and 8, and those engines are called 3-cylinder, 4-cylinder, 6-cylinder and 8-cylinder engines, respectively.

The engine 1 is of the direct injection type that fuel is directly injected from a fuel injection valve 4 to a combustion chamber 5 in the cylinder 2 (called direct injection), and a gas mixture of the injected fuel and air in the combustion chamber 5 is ignited (fired) by a spark plug 6. The fuel injected from the fuel injection valve 4 is preferably gasoline, but may be another kind of fuel.

The engine 1 is provided with an intake valve 9 and an exhaust valve 10 for opening and closing a channel between the combustion chamber 5 and an intake passage 7 and a channel between the combustion chamber 5 and an exhaust passage 8, respectively. The engine 1 is also provided with cams 11 and 12 for respectively opening and closing the intake valve 9 and an exhaust valve 10, a throttle valve 13 for adjusting an intake amount through the intake passage 7, and a connecting rod 15 and a crank arm 16 for transmitting reciprocal motion of a piston 3 as rotary motion to a crankshaft 14.

The opening/closing timings and lift amounts of the intake valve 9 and the exhaust valve 10 are optionally changeable in some cases. In that case, the opening/closing timings and lift amounts of the intake valve 9 and the exhaust valve 10 are changed by a valve timing/lift controller 20.

The engine 1 includes, as an energy supply unit for supplying energy (rotation torque) to start the engine, a unit for producing combustion in the combustion chamber 5 and supplying energy required for startup of the engine (i.e., first energy supply unit (means)) . The first energy supply unit directly injects and ignites fuel in a cylinder having been under the expansion stroke when the engine 1 is stopped, to thereby produce combustion in the cylinder under the expansion stroke. Likewise, the first energy supply unit successively produces combustion in the subsequent cylinders, starting from the above one, such that the engine 1 is started by utilizing energy of the combustion. Such an operation is realized with control executed by a control unit 19 for the cylinders of the engine 1 in the engine stop state. An energy supply method, etc. performed by the first energy supply unit will be described in detail later.

The engine 1 also includes a starter motor 17 as another energy supply unit (i.e., a second energy supply unit (means)) . The starter motor 17 is constituted as an electric motor for rotating the crankshaft 14 through a gear mechanism 18. In other words, the second energy supply unit is employed to start the engine 1 by externally applying rotation torque to the crankshaft 14.

The starter motor 17 may be of the type capable of changing energy applied to the engine 1 through control of a current or voltage supplied to the starter motor. As another general type, for example, the starter motor 17 may be controlled just by turning on/off electric power without performing the current or voltage control.

The control unit 19 is constituted as a computer unit including a microprocessor and peripheral devices such as RAM and ROM. The control unit 19 executes various kinds of processing required to control the motion status of the engine 1 in accordance with programs stored in the ROM.

As one example of the processing, an air/fuel ratio sensor (not shown) is disposed in the exhaust passage 8, and the fuel injection amount of the fuel injection valve 4 is controlled so that the air/fuel ratio measured by the air/fuel sensor is matched with a predetermined air/fuel ratio.

In addition to the air/fuel sensor, other various sensors are also disposed as sensors of which outputs are referred to by the control unit 19. Among such sensors, those ones related to the present invention are, e.g., a crank angle sensor 24 for outputting a signal depending on the crank angle of the crankshaft 14, and a cam angle sensor 25 for outputting a signal depending on the cam angle of the cam 11 on the intake side.

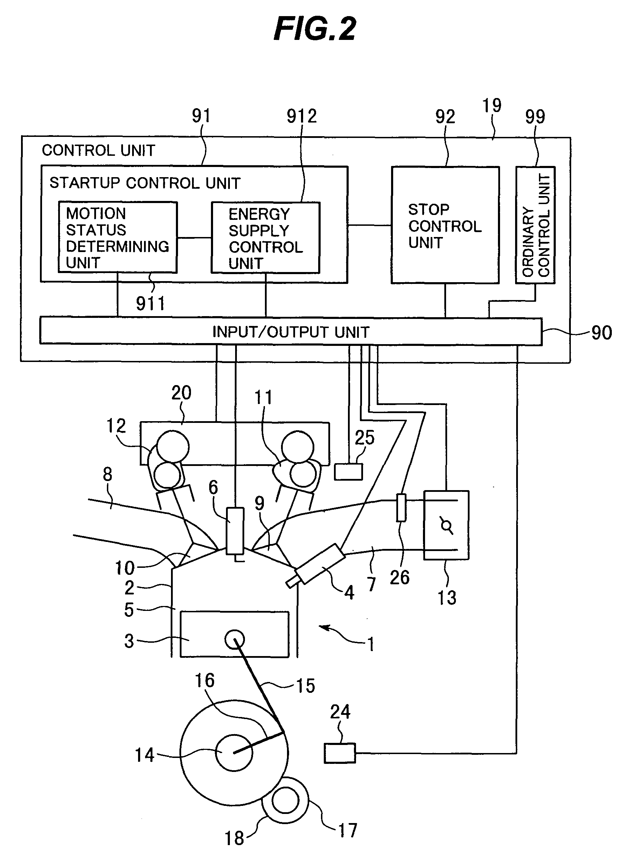

The control unit 19 according to the embodiment of the present invention will be described below with reference to Fig. 2. The control unit 19 includes an input/output unit 90 for executing a process of taking, into the control unit 19, the signals from the sensors which detect the status required for making control to start, stop and operate the engine 1, and a process of outputting signals to control equipment, such as the throttle valve 13, the valve timing/lift controller 20 and the fuel injection valve 4, which are required to start, stop and operate the engine 1. Further, the control unit 19 includes an ordinary control unit 99 for starting and operating the engine 1 in an ordinary manner, a startup control unit 91, and a stop control unit 92.

The startup control unit 91 serves as a control unit for starting the engine 1, and the stop control unit 92 serves as a control unit for stopping the engine 1.

In the embodiment, the startup control unit 91 comprises a motion status determining unit 911 for detecting and determining the motion status of the engine 1, and an energy supply control unit 912 for controlling the plurality of energy supply units (i.e., the first energy supply unit and the second energy supply unit) for supplying energy to the engine 1.

The motion status determining unit 911 determines whether the engine 1 is able to continue revolution, based on a difference between the revolution speed of the engine 1 at the ignition timing of the first energy supply unit, particularly at the timing of igniting in the cylinder which has been under the compression stroke in the engine stop state, and the revolution speed at the time when the crank angle of the engine 1 has changed through a predetermined rotation angle from the crank angle at the above ignition timing.

Alternatively, the motion status determining unit 911 may determine whether the engine 1 is able to continue revolution, based on the fact that the crankshaft 14 has passed a predetermined rotational position where load torque caused about the crankshaft 14 by compressive pressure generated in the cylinder, which has been under the compression stroke in the engine stop state, is maximized.

The energy supply control unit 912 basically executes control such that the engine 1 is started by supplying energy to the engine 1 from both the first energy supply unit and the second energy supply unit (starter motor 17) at the startup of the engine 1, and the supply of energy to the engine 1 from the second energy supply unit is stopped when the motion status determining unit 911 determines, after the start of motion of the engine 1, that the engine is able to continue the revolution, as the result of the determination made by itself.

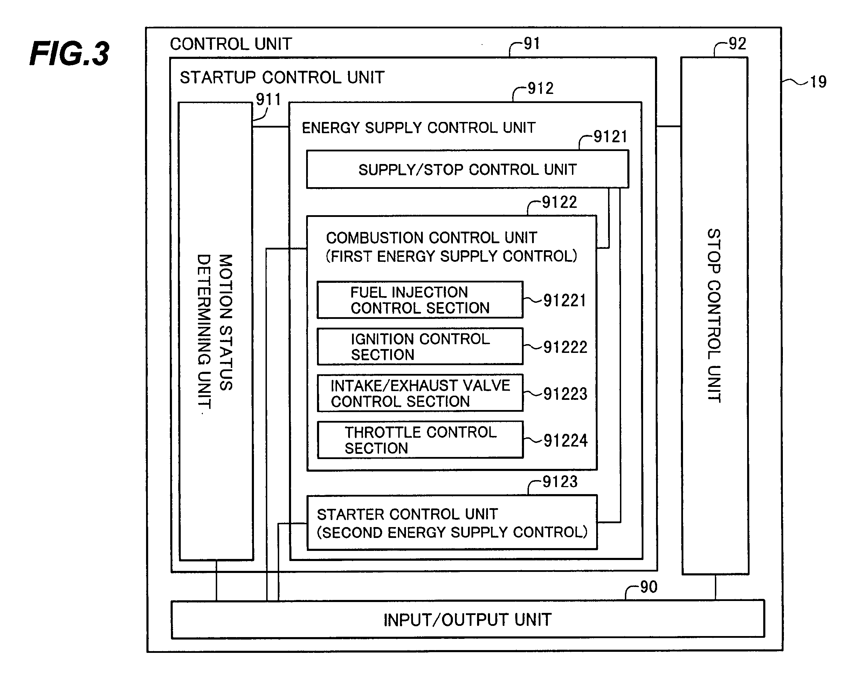

Details of the startup control unit 91 will be described below with reference to Fig. 3. The energy supply control unit 912 in the startup control unit 91 comprises a supply/stop control unit 9121, a combustion control unit 9122 for executing first energy supply control, and a starter control unit 9123 for executing second energy supply control.

The combustion control unit 9122 is made up of a fuel injection control section 91221 for setting the amount and the timing by and at which fuel is injected by the fuel injection valve 4, an ignition control section 91222 for setting the timing of ignition made by the spark plug 6, an intake/exhaust valve control section 91223 for setting the opening/closing timings and the opening degrees of the intake valve 9 and the exhaust valve 10 by the valve timing/lift controller 20, and a throttle control section 91224 for setting the opening degree of the throttle valve 13. The combustion control unit 9122 enables energy to be supplied to the engine 1 while realizing optimum combustion control of the engine 1.

The supply/stop control unit 9121 executes control for supply and stop of energy from the plurality of energy supply units when the engine 1 is started. In particular, the supply/stop control unit 9121 executes control for supply and stop of energy from the plurality of energy supply units in an appropriate manner based on the determination result of the motion status determining unit 911, namely depending on the motion status of the engine 1. By thus supplying and stopping energy depending on the motion status of the engine 1, stable startup is realized without causing a startup failure and supply of excessive energy.

A control flow in the startup control according to the embodiment will be described below.

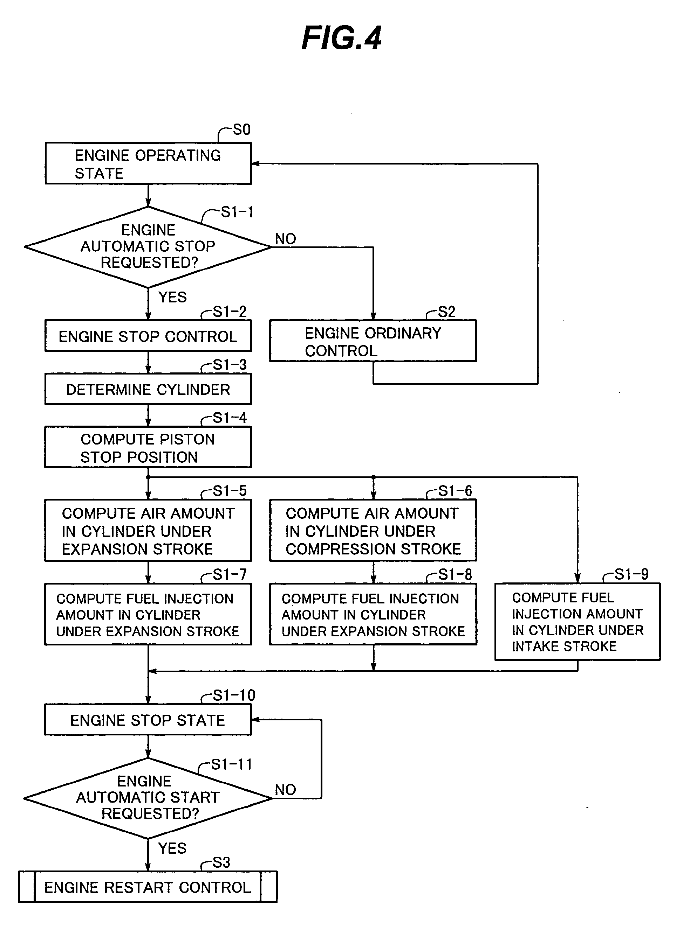

Prior to entering a detailed description of the control flow in the startup control, the outline of respective control flows in the stop control executed before the startup and the subsequent startup control will be described below with reference to Fig. 4.

The stop control flow and the startup control flow are executed respectively by the stop control unit 92 and the startup control unit 91 in the control unit 19.

The control unit 19 also executes determination as to the stop and startup of the engine 1 in accordance with other processing flow than that executed in the embodiment, and executes the stop control flow or the startup control flow in response to a stop request or a startup request from the other processing flow.

Here, a stop condition is determined to be satisfied, for example, when a vehicle is in such an idling state that the engine 1 is in the warm-up state, a brake is in the actuated state, and an accelerator pedal is not depressed.

A startup condition is determined to be satisfied when any operation indicating start of the vehicle to run is made in the above idling state, for example when the brake pedal is released, or when the accelerator pedal is depressed, or when a transmission lever is shifted.

Thus, the processing flows of the stop control and the startup control, shown in Fig. 4, are intended to realize the "idling stop" operation by stopping the engine 1 when the vehicle is stopped, and by restarting the engine 1 before the vehicle stars to run.

Referring to Fig. 4, the control unit 19 first determines in the engine operating state (step S0) whether an engine automatic stop is requested (step S1-1). If the engine automatic stop is not requested, ordinary control of the engine 1 is continued (step S2) while repeatedly determining whether the engine automatic stop is requested.

If the engine automatic stop is requested, the engine stop control (step S1-2) is executed.

When the engine stop control (step S1-2) is completed and the engine 1 is stopped, the crank angle and the cam angle are detected respectively by the crank angle sensor 25 and the cam angle sensor 26, and a cylinder determining process (step S1-3) is executed to determine a cylinder under the expansion stroke (i.e., the cylinder 2) based on the detected results.

Then, the control unit 19 computes, from the detected crank angle, a position where the piston of the cylinder under the expansion stroke is stopped (step S1-4). At this time, piston stop positions in other cylinders than the cylinder under the expansion stroke are also uniquely decided.

Then, the air amount in the cylinder under the expansion stroke and the air amount in the cylinder under the compression stroke are computed from the piston stop positions in those cylinders (step S1-5 and step S1-6). Because the piston stop positions in the cylinder under the expansion stroke and the cylinder under the compression stroke are already computed and the diameter of each cylinder, the shape of a crown surface of the piston 3, etc. are known as design values in advance, the volume of the combustion chamber 5 in the cylinder under the expansion stroke and the volume of the combustion chamber 5 in the cylinder under the compression stroke can be computed from those known values.

Assuming here that the pressure in each combustion chamber 5 of the engine 1 (i.e., the cylinder pressure) is returned to the atmospheric pressure immediately after the stop of the engine, the air amount in the cylinder under the expansion stroke and the air amount in the cylinder under the compression stroke can be computed by making correction based on the temperature estimated from, e.g., water temperature information of the engine 1.

After computing the air amounts in the respective combustion chambers 5 of the cylinder under the expansion stroke and the cylinder under the compression stroke, the fuel injection amounts corresponding to those air amounts are computed (step S1-7 and step S1-8). The fuel injection amounts can be set, for example, such that the air/fuel ratio of the air amount to the fuel amount in each cylinder becomes a predetermined value. The air/fuel ratio set here is preferably decided to a value at which optimum combustion is performed.

At the same time, the fuel amount injected to the cylinder under the intake stroke is also computed (step S1-9). Because the cylinder under the intake stroke will be operated from the state under the intake stroke after the startup, the fuel amount may be set to the same value as that set at the ordinary startup in consideration of that air is sufficiently taken into the cylinder under the intake stroke.

In such a way, the fuel amount required for starting the engine 1 can be computed in advance. The computation of the fuel amount required for the startup is preferably executed by the startup control unit 91 in the control unit 19.

The fuel amount may be computed through the above-described process immediately after the stop of the engine 1. Alternatively, the fuel amount supplied to each cylinder at the startup may be computed through a similar process after a startup request is issued.

Then, in the engine stop state (step S1-10), the control unit 19 waits for a restart request (step S1-11). Specifically, the control unit 19 determines the presence or absence of the startup request for the engine 1 (step S1-11). If the startup request is confirmed, the startup control of the engine 1 is commenced (step S3). If the startup request is absent, the control unit 19 waits for the startup request while the engine 1 is held in the stop state.

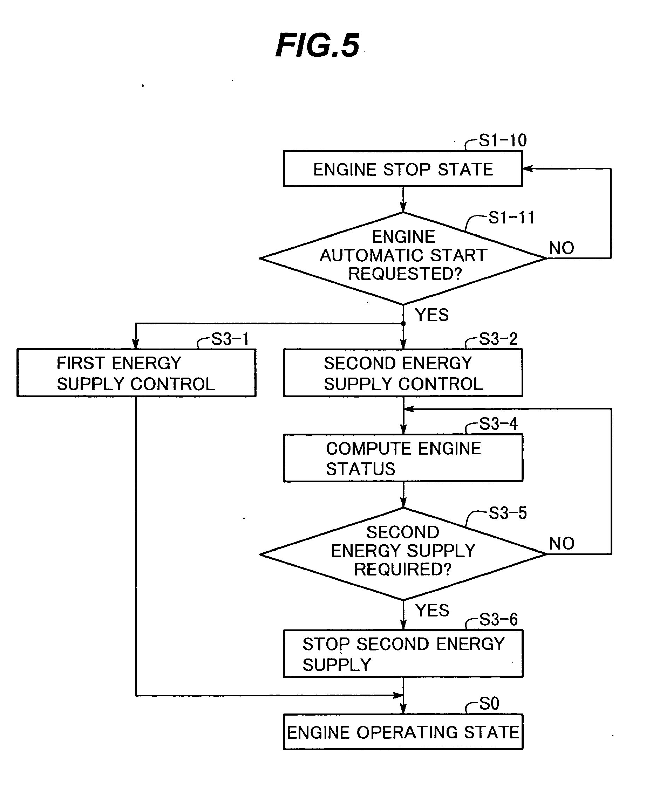

A processing flow of the startup control in the case of the presence of the engine automatic startup request will be described below with reference to Fig. 5.

If the presence or absence of the engine automatic startup request is determined (step S1-11) in the engine stop state (step S1-10) and the engine automatic startup request is confirmed, the control unit 19 executes the first energy supply control (step S3-1) for supplying energy to the engine 1 by the first energy supply unit and the second energy supply control (step S3-2) for supplying energy to the engine 1 by the second energy supply unit.

While the first energy supply control (step S3-1) and the second energy supply control (step S3-2) are executed as processing flows independent of each other, the timings of starting the supply of energy to the engine 1 can be controlled in a cooperative manner such as starting the energy supply at the same time or in certain order.

For example, in the first energy supply control (step S3-1), fuel is injected to each cylinder of the engine 1 and is ignited to produce combustion in the cylinder, thereby supplying energy to the engine 1. In the second energy supply control (step S3-2), energy is externally supplied to the engine 1 by adding rotation torque from the starter motor 17 to the crankshaft 14 of the engine 1. On that occasion, the first energy supply control (step S3-1) is first started and the second energy supply control (step S3-2) is then started after the lapse of a predetermined time (with a certain time delay). Alternatively, the first energy supply control (step S3-1) and the second energy supply control (step S3-2) may be started at the same time.

If the startup request is confirmed as described above, the supply of energy to the engine 1 is started by the plurality of energy supply units. When the first energy supply control (step S3-1) and the second energy supply control (step S3-2) are executed, the engine 1 starts motion.

To quantitatively evaluate the status of the engine motion, the control unit 19 computes the engine status (step S3-4) . The status of the engine 1 can be quantitatively computed, for example, by a method of evaluating the energy of the engine 1 from the revolution speed and inertia of the engine 1, or a method of evaluating a change amount in the revolution speed of the engine 1 or an acceleration of the engine revolution. By computing the motion status of the engine 1 in such a manner, it is possible to evaluate continuation of the revolution of the engine 1.

After computing the engine status (step S3-4), it is determined based on the computed status of the engine 1 whether energy is to be supplied from the second energy supply unit, i.e. , the starter motor 17 (step S3-5) . Here, it is determined whether the motion of the engine 1 can be continued without the supply of energy from the second energy supply unit.

If the necessity of the second energy supply is determined, the energy supply from the second energy supply unit is continued while repeatedly executing the determination as to whether energy is to be supplied from the second energy supply unit. If it is determined that the energy supply from the second energy supply unit is no longer required, a process of stopping the second energy supply is executed (step S3-6) to stop the power supply from the second energy supply unit.

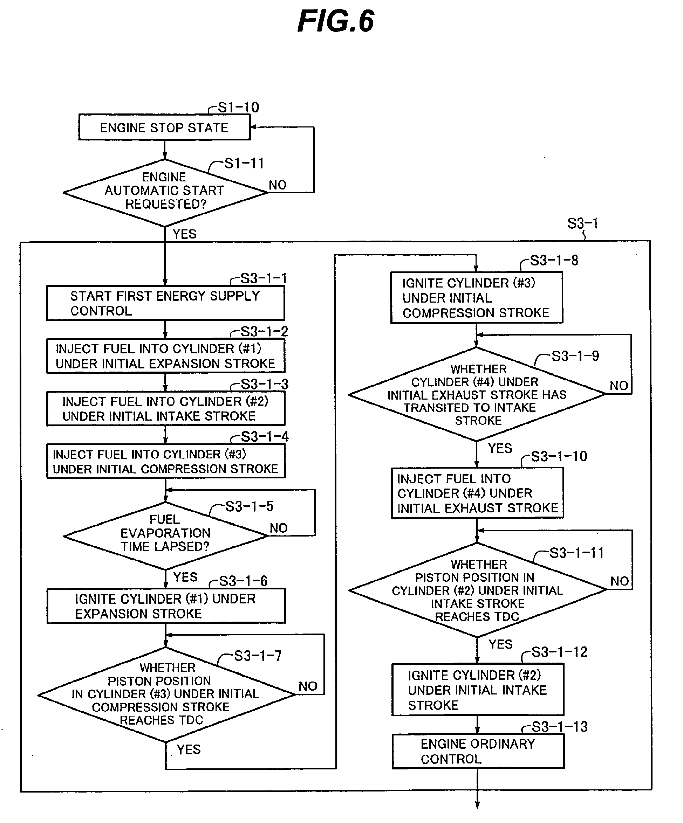

The details of the processing flow in the first energy supply control (step S3-1) according to the embodiment of the present invention will be described below with reference to Fig. 6. Note that symbols #1 - #4 in Fig. 6 indicate the cylinder numbers in the engine 1.

In the first energy supply control (step S3-1), if the automatic startup request for the engine 1 is confirmed, the first energy supply control is executed (step S3-1-1). When the fuel amount supplied to each cylinder of the engine 1 is not computed before the request for starting the engine 1, the air amounts in the respective combustion chambers 5 of the cylinder under the expansion stroke and the cylinder under the compression stroke are computed at this point in time as described above, and the fuel injection amounts corresponding to the air amounts are also computed.

At the same time, the fuel amount supplied to the cylinder under the intake stroke is also computed. As mentioned above, because the cylinder under the intake stroke will be operated from the state under the intake stroke after the startup, the fuel amount may be set to the same value as that set at the ordinary startup in consideration of that air is sufficiently taken into the cylinder under the intake stroke.

When the first energy supply control is started, fuel is injected to the cylinder (#1) having been under the expansion stroke in the initial state (engine stop state) (step S3-1-2). Then, fuel is injected to the cylinder (#2) having been under the intake stroke in the same initial state (engine stop state) (step S3-1-3). Further, fuel is injected to the cylinder (#3) having been under the compression stroke in the same initial state (engine stop state) (step S3-1-4).

Alternatively, the fuel injection (step S3-1-2) to the cylinder (#1) having been under the expansion stroke in the initial state, the fuel injection (step S3-1-3) to the cylinder (#2) having been under the intake stroke in the initial state, and the fuel injection (step S3-1-4) to the cylinder (#3) having been under the compression stroke in the initial state may be performed at the same time.

After injecting fuel to the cylinder (#1) under the expansion stroke, the control unit 19 is held in the standby state for a predetermined time to wait for vaporization of the injected fuel and determines whether the time required for the fuel vaporization has lapsed (step S3-1-5) . The vaporization time is about 100 msec.

If the preset vaporization time has lapsed, the spark plug 6 of the cylinder (#1) having been under the expansion stroke in the initial state is energized to ignite the gas mixture of the fuel and the air therein (step S3-1-6) . With burning of the gas mixture in the cylinder (#1) under the expansion stroke, combustion energy is produced in that cylinder, whereby the piston 3 is pushed down to start the rotation of the crankshaft 14. With the rotation of the crankshaft 14, the piston 3 of the cylinder (#3) having been under the compression stroke in the initial state is pushed up to reach the top dead center (TDC).

At that time, the gas mixture in the cylinder (#3) under the compression stroke is compressed, thus generating a rotation load acting to resist the compression. However, because kinetic energy for directly rotating the crankshaft 14 is added from the second energy supply unit, i.e., the starter motor 17, the crankshaft 14 is able to continue the rotation.

Then, it is determined whether the piston 3 of the cylinder (#3) having been under the compression stroke in the initial state has reached the top dead center (TDC) (step S3-1-7). If so, the gas mixture in the cylinder (#3) under the compression stroke is ignited (step S3-1-8). Note that, instead of determining whether the piston 3 of the cylinder (#3) has reached TDC, the ignition timing may be set to another predetermined angle in the side before TDC.

With the ignition of the gas mixture in the cylinder (#3) having been under the compression stroke in the initial state, combustion is produced in that cylinder and energy is further supplied to the engine 1 to rotate the crankshaft 14 of the engine 1.

Then, it is determined whether the cylinder (#4) having been under the exhaust stroke in the initial state has shifted to the intake stroke (step S3-1-9). If so, fuel is injected to the cylinder (#4) having been under the exhaust stroke in the initial state (step S3-1-10) . While the fuel is injected to the cylinder (#4) in the intake stroke in this embodiment, the fuel may be injected in the subsequent compression stroke.

With further rotation of the crankshaft 14, the cylinder (#2) having been under the intake stroke in the initial state is shifted from the intake stroke to the compression stroke. It is then determined whether the piston 3 of the cylinder (#2) has reached TDC in the compression stroke (step S3-1-11) . If the reach to TDC is determined, the gas mixture in the cylinder (#2) is ignited (step S3-1-12).

Thus, the energy supply to the engine 1 is performed by successively injecting and igniting the fuel in the respective cylinders as described above. After confirming the rotation of the crankshaft 14, the control mode for the engine 1 is shifted to the ordinary control (step S3-1-13) in which the fuel injection at the optimum timing and in the optimum amount and the ignition at the optimum timing are performed while determining in which stroke each cylinder is positioned.

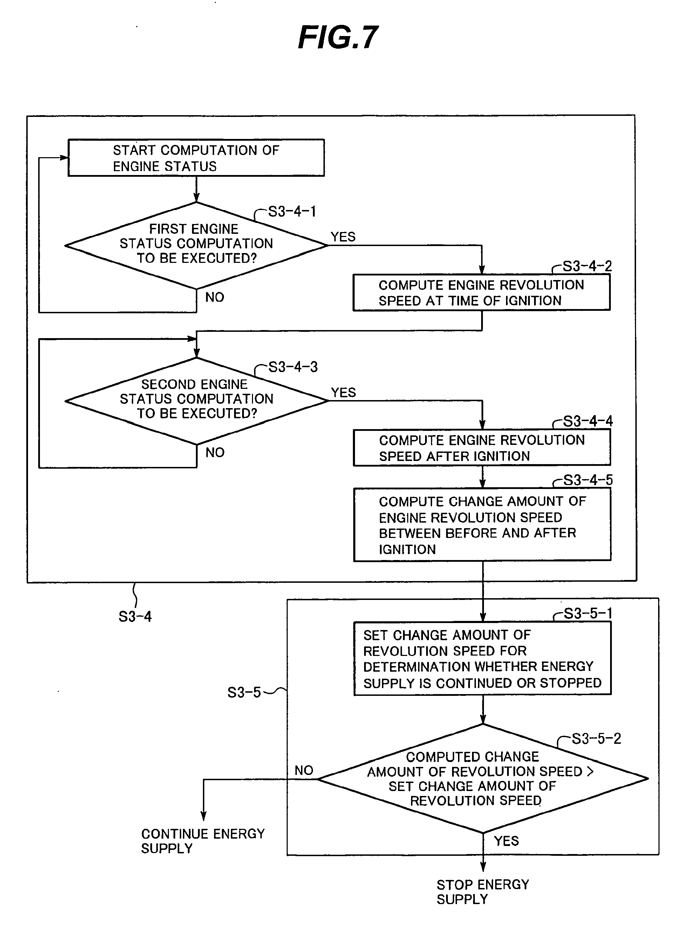

Apractical example of the engine status computing step (S3-4) and the energy supply determining step (S3-5) according to the embodiment of the present invention will be described below with reference to Fig. 7.

The engine status computing step (S3-4) is executed after start of the startup control. First, whether to compute first engine status is determined (step S3-4-1) . In other words, this step determines whether first status of the engine 1 is to be computed or not. If the status computation is determined to be executed, the revolution speed of the engine 1 at the ignition timing is computed (step S3-4-2) . On the other hand, if the status computation is determined to be not executed, the above determination step is repeated.

After computing the revolution speed of the engine 1 at the ignition timing, it is determined whether second engine status is to be computed or not (step S3-4-3). If so, the engine status at the time after the crankshaft 14 has rotated through a predetermined angle from the end of the ignition control is computed. To that end, whether the rotation angle of the crankshaft 14 has reached the predetermined angle is determined. While the rotation angle of the crankshaft 14 is determined in this example, the determination may be performed as to whether a predetermined time has lapsed after the ignition.

If it is determined that the rotation angle of the crankshaft 14 has changed by the predetermined angle, the revolution speed of the engine 1 at that time is computed (step S3-4-4).

Then, a change amount (difference) of the revolution speed between before and after the ignition is computed from the revolution speed of the engine 1 in the first engine status and the revolution speed of the engine 1 after the rotation through the predetermined angle (step S3-4-5).

The change amount of the revolution speed between before and after the ignition provides the result equivalent to that of computing the motion status of the engine 1. When the change amount of the revolution speed is large, this means that the engine 1 receives sufficient energy and is able to continue the revolution.

On the other hand, when the change amount of the revolution speed is small, this means that the engine 1 is not supplied with sufficient energy and cannot continue the revolution with a large probability.

Accordingly, after computing the change amount of the revolution speed the engine 1, it is determined using the computed change amount of the revolution speed whether the energy supply is to be performed or not (step S3-5).

For that purpose, a value for determining the change amount of the revolution speed is first set (step S3-5-1) to be used in the determination as to whether the energy supply is to be performed or not. This value may be changed depending on the rotation load imposed on the engine 1.

Then, the computed change amount of the revolution speed of the engine 1 is compared with the value set for the determination (step S3-5-2). If the computed change amount is larger than the set value for the determination, the energy supply is stopped, and if the computed change amount is smaller than the set value, the energy supply is continued.

According to this embodiment, as described above, the motion status of the engine 1 is determined from the engine revolution speed and the energy supply is stopped depending on the determination result without precisely estimating the energy supplied with combustion and the energy supplied from the starter motor. Therefore, the energy required for the startup can be properly supplied to the engine 1, and the engine 1 can be smoothly started with no wasteful use of energy.

Also, the motion status of the engine 1 is determined from the engine revolution speed and the energy supply is stopped depending on the determination result without precisely controlling the energy supplied with combustion and the energy supplied from the starter motor. Therefore, the energy required for the startup can be properly supplied to the engine 1, and the engine 1 can be smoothly started with no wasteful use of energy. Accordingly, the need of using an advanced starter with the function of torque control is eliminated and an engine starting system can be constructed at a lower cost.

Thus, since the starting system of the present invention is able to minimize energy consumed at the startup, it is suitable for the case of frequently repeating the stop and startup of the engine 1 as required in the "idling stop" vehicle, for example.

Also, the application field of the present invention is not limited to the restart in the "idling stop" operation, and the present invention is also applicable to the startup in response to turning-on of an ignition key.

Additionally, the present invention can be further applied to any other case of starting an internal combustion engine, such as restart of the engine in a hybrid vehicle in which the engine and an electric motor are operated in a combined manner.

## Claims

1. A starting method for an internal combustion engine (1) which includes at least two energy supply means for supplying energy to bring said engine into motion and is started by using said at least two energy supply means, the starting method comprising the steps of:
supplying energy to said engine (1) from each of said at least two energy supply means at startup of said engine (1), thereby starting said engine (1); and
determining motion status of said engine (1) after said engine (1) has started motion, and stopping the energy supply to said engine (1) from at least one of said plurality of energy supply means based on a determination result.

2. A starting method for an internal combustion engine which includes first energy supply means and second energy supply means (17) for supplying energy to bring said engine into motion and is started by using said two energy supply means, the starting method comprising the steps of:
supplying energy to said engine (1) from both said first energy supply means and said second energy supply means (17) at startup of said engine (1), thereby starting said engine (1); and
determining motion status of said engine (1) after said engine (1) has started motion, and stopping the energy supply to said engine (1) from said second energy supply means (17) based on a determination result.

3. The starting method for the internal combustion engine according to Claim 2, wherein said first energy supply means directly injects and ignites fuel in a cylinder having been under expansion stroke in an engine stop state to produce combustion in the cylinder under the expansion stroke, and produces combustion in the other cylinders successively, thereby starting said engine by utilizing energy of the combustion, and
said second energy supply means (17) externally applies rotation torque to a crankshaft of said engine, thereby starting said engine.

4. The starting method for the internal combustion engine according to Claim 2 or 3, wherein the step of determining motion status of said engine (1) is executed by determining whether revolution of said engine (1) continues, based on a difference between an engine revolution speed at ignition timing in said first energy supply means and an engine revolution speed at the time when a crank angle of said engine (1) has changed through a predetermined rotation angle from a crank angle at said ignition timing, and by stopping the energy supply to said engine from said second energy supply means (17) when the revolution of said engine (1) is determined to continue.

5. The starting method for the internal combustion engine according to Claim 4, wherein the step of determining motion status of said engine (1) is executed by determining whether the revolution of said engine continues, based on a difference between an engine revolution speed at ignition timing at which said first energy supply means ignites the cylinder having been under compression stroke in the engine stop state and an engine revolution speed at the time when the crank angle of said engine (1) has changed through the predetermined rotation angle from the crank angle at said ignition timing.

6. The starting method for the internal combustion engine according to Claim 2 or 3, wherein the step of determining motion status of said engine is executed by determining whether revolution of said engine continues, based on confirming that said crankshaft (14) has passed a predetermined rotational position where load torque caused about said crankshaft (14) by compressive pressure generated in the cylinder, which has been under compression stroke in the engine stop state, is maximized, and by stopping the energy supply to said engine from said second energy supply means (17) when the revolution of said engine (1) is determined to continue.

7. The starting method for the internal combustion engine according to Claim 4, wherein when the revolution of said engine (1) is determined not to continue, the energy supply to said engine (1) from said second energy supply means (17) is continued while repeating the determination as to the motion status of said engine (1).

8. A starting system for an internal combustion engine which includes at least two energy supply means for supplying energy to bring said engine (1) into motion and is started by using said at least two energy supply means, the starting system comprising:
motion status determining means for determining motion status of said engine (1); and
energy supply control means for supplying energy from each of said at least two energy supply means at startup of said engine (1), thereby starting said engine (1), and stopping the energy supply to said engine from at least one of said plurality of energy supply means based on a determination result made by said motion status determining means after said engine has started motion.

9. A starting system for an internal combustion engine which includes first energy supply means and second energy supply means (17) for supplying energy to bring said engine into motion and is started by using said two energy supply means, the starting system comprising:
motion status determining means for determining motion status of said engine (1); and
energy supply control means for supplying energy from both said first energy supply means and said second energy supply means (17) at startup of said engine, thereby starting said engine (1), and stopping the energy supply to said engine (1) from said second energy supply means (17) based on a determination result made by said motion status determining means after said engine (1) has started motion.

10. The starting system for the internal combustion engine according to Claim 9, wherein said first energy supply means directly injects and ignites fuel in a cylinder having been under expansion stroke in an engine stop state to produce combustion in the cylinder under the expansion stroke, and produces combustion in the other cylinders successively, thereby starting said engine by utilizing energy of the combustion, and
said second energy supply means (17) externally applies rotation torque to a crankshaft of said engine, thereby starting said engine (1).

11. The starting system for the internal combustion engine according to Claim 9 or 10, wherein said motion status determining means determines whether revolution of said engine (1) continues, based on a difference between an engine revolution speed at ignition timing in said first energy supply means and an engine revolution speed at the time when a crank angle of said engine (1) has changed through a predetermined rotation angle from a crank angle at said ignition timing, and
said energy supply control means stops the energy supply to said engine from said second energy supply means (17) when said motion status determining means determines that the revolution of said engine (1) continues.

12. The starting system for the internal combustion engine according to Claim 11, wherein said motion status determining means determines whether the revolution of said engine (1) continues, based on a difference between an engine revolution speed at ignition timing at which said first energy supply means ignites the cylinder having been under compression stroke in the engine stop state and an engine revolution speed at the time when the crank angle of said engine (1) has changed through the predetermined rotation angle from the crank angle at said ignition timing.

13. The starting system for the internal combustion engine according to Claim 9 or 10, wherein said motion status determining means determines whether revolution of said engine (1) continues, based on confirming that said crankshaft has passed a predetermined rotational position where load torque caused about said crankshaft (14) by compressive pressure generated in the cylinder, which has been under compression stroke in the engine stop state, is maximized, and
said energy supply control means stops the energy supply to said engine (1) from said second energy supply means (17) when said motion status determining means determines that the revolution of said engine continues.
